Europäisches Patentamt

European Patent Office

Office européen des brevets

(19)

(11) Numéro de publication: **0 061 413 B1**

## (12) FASCICULE DE BREVET EUROPEEN

(45) Date de publication du fascicule du brevet:
**22.05.85**

(51) Int. Cl.⁴: **A 01 G 27/00**

(21) Numéro de dépôt: **82430007.3**

(22) Date de dépôt: **23.03.82**

(54) **Dispositif pour la culture de plantes en pot.**

(30) Priorité: **23.03.81 FR 8106042**

(43) Date de publication de la demande:
**29.09.82 Bulletin 82/39**

(45) Mention de la délivrance du brevet:
**22.05.85 Bulletin 85/21**

(84) Etats contractants désignés:
**AT BE CH DE FR GB IT LI LU NL SE**

(56) Documents cités:
**CH - A - 346 720
FR - A - 1 271 604
FR - A - 1 493 029
FR - A - 2 071 441
FR - A - 2 142 234
US - A - 1 400 628
US - A - 3 534 498**

(73) Titulaire: **Poquet, Georges, 16 Square Michelet,
F-13009 Marseille (FR)**

(72) Inventeur: **Poquet, Georges, 16 Square Michelet,
F-13009 Marseille (FR)**

(74) Mandataire: **Marek, Pierre, 32, rue de la Loge,
F-13002 Marseille (FR)**

ACTORUM AG

## Description

La présente invention concerne un dispositif pour la culture de plantes en pots, du genre comprenant: Une enveloppe ou bac extérieur, utilisé(e) comme cache-pot, un pot de culture logé dans ladite enveloppe ou bac extérieur, un réservoir destiné à contenir de l'eau et supporté par l'enveloppe, et des moyens d'irrigation reliant ledit réservoir audit pot de culture.

Des dispositifs de ce genre sont, par exemple, décrits dans les documents CH-A-346720 et US-A-3534498 lesquels présentent cependant l'important inconvénient de ne pouvoir recevoir des pots horticoles classiques exécutés en terre cuite, soit en raison du fait que le pot de culture doit être percé de trous permettre le passage des conduits d'irrigation, tandis que le diamètre de l'épaulement externe d'appui du pot de culture doit être complémentaire de celui de l'épaulement interne de soutien de l'enveloppe extérieure pour pouvoir reposer sur ce dernier (CH-A-346720), soit en raison du fait que le pot de culture doit être muni de pieds pour maintenir son fond à distance du fond de l'enveloppe extérieure (US-A-3534498).

D'autre part, les systèmes d'irrigation de ces dispositifs sont relativement complexes et cette complexité influe défavorablement sur leur fonctionnement et sur leur prix de revient.

On connaît aussi (US-A-1400628), un dispositif d'irrigation comprenant un réservoir circulaire se fixant sur le bord d'un pot de culture et une mèche absorbande chevauchant le bord supérieur du pot et plongeant, par ses parties opposées, d'une part, dans ledit réservoir et, d'autre part, dans ledit pot de culture.

Toutefois, ce dispositif présente l'inconvénient de nécessiter un réservoir exactement adapté aux diamètre du pot de culture, ce qui lui enlève une grande partie de son intérêt compte tenu du fait que les pots horticoles peuvent avoir de nombreux diamètres différents.

La présente invention vise à remédier aux inconvénients susmentionnés des dospositifs connus du genre défini ci-dessus.

L'objectif à atteindre est un bac à réservoir d'eau comportant des moyens simples et efficaces pour irriguer la plante contenue dans le pot de culture, en amenant à ses racines la quantité d'eau juste nécessaire à son bon développement.

Un autre objectif de l'invention est de réaliser un dispositif pour la culture de plantes en pot, dont le pot de culture peut être constitué indifféremment par son propre pot ou par un pot horticole traditionnel non modifié exécuté en terre cuite et contenant une plante déjà élevée par un fleuriste ou autre professionnel.

Ces objectifs sont atteints grâce au dispositif pour la culture de plantes en pot selon l'invention lequel est remarquable par le fait que, afin de pouvoir recevoir indifféremment son propre pot ou des pots de culture traditionnels non modifiés, tout en servant de cache-pot, l'enveloppe ou bac extérieur est muni(e), intérieurement, sur son fond, de supports d'égale hauteur et s'étendant verticalement à partir dudit fond, en constituant ainsi les moyens de support du pot de culture, les moyens d'irrigation immergés par une extrémité dans l'eau du réservoir supporté par ladite enveloppe, contournant le bord supérieur du pot pour plonger, par leur autre extrémité, dans ledit pot, de manière à irriguer la plante contenue dans ce dernier en fonction de ses besoins, de façon permanente.

Grâce au dispositif selon l'invention, l'eau contenue dans le réservoir supérieur périphérique peut être amenée, par l'intermédiaire des moyens de transvasement plongeant dans le pot, jusqu'aux racines de la plante, de manière à l'alimenter en continu, pendant de longues périodes, d'une façon juste suffisante pour ne pas nuire à son bon développement, mais à maintenir la terre et lesdites racines dans un état satisfaisant de fraîcheur. D'autre part, de par sa conception, il constitue un bac à plantes, mais peut également recevoir des pots horticoles traditionnels en terre cuite contenant des végétaux tels que des plantes d'appartement déjà élevées et ainsi être effectivement utilisé comme cache-pot.

Un autre avantage du dispositif selon l'invention découle du fait qu'il rend possible la constitution d'une seconde réserve d'eau dans la partie inférieure de l'enveloppe extérieure formant cache-pot, cette réserve d'eau pouvant avoir une hauteur telle que la partie inférieure du pot s'y trouve nécessairement plongée lorsqu'il est positionné dans le cache-pot. En utilisant un pot horticole classique obtenue dans un matériau perméable et poreux tel que terre cuite non vernissée, ou un pot pourvu, latéralement, d'une pluralité de perforations, il est possible de réaliser une irrigation prolongée de la terre contenue dans le pot, tout en créant un échange équilibré, à travers la paroi latérale dudit pot, entre l'évaporation produite par la réserve d'eau inférieure et celle qui est engendrée par l'eau imprégnant la terre contenue dans ce dernier. En outre, dans le cas d'utilisation d'un pot doté de perforations latérales de dimensions convenables, les racines de la plante contenue dans ce dernier peuvent passer à travers lesdites perforations et plonger dans la réserve d'eau inférieure, de manière à réaliser un dispositif de culture hydrophonique.

Ces buts, caractéristiques et avantages, et d'autres encore, ressortiront mieux de la description qui suit et des dessins annexés dans lesquels:

Fig. 1 est une vue en perspective du dispositif pour la culture de plantes en pot selon l'invention, dont les principaux éléments sont représentés séparés, en alignement, suivant leur ordre de montage;

Fig. 2 est une vue en élévation de ce dispositif;

Fig. 3 est une vue en coupe suivant la ligne 3–3 de la fig. 2 et représentant un mode d'exécution selon lequel le bac à plantes intérieur est constitué par un pot pourvu de perforations latérales;

Fig. 4 est une vue en coupe selon la ligne 4–4 de la fig. 2 et montrant un mode d'exécution suivant lequel le pot intérieur est un pot horticole classique;

Fig. 5 est une vue en plan du dispositif surmonté de son couvercle, le bac à plantes ou pot intérieur ayant été enlevé;

Fig. 6 est une vue en plan de réservoir d'eau supérieur;

Fig. 7 est une vue en plan du dispositif dont le couvercle a été enlevé;

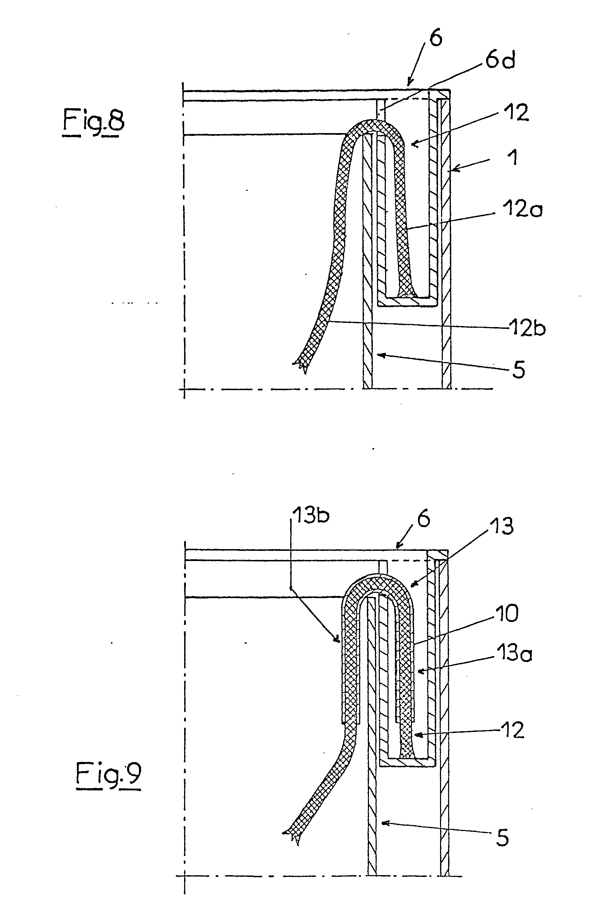

Fig. 8 est une vue de détail, en coupe verticale, d'une première variante d'exécution des moyens de transvasement de l'eau contenue dans le réservoir supérieur;

Fig. 9 est une vue de détail, en coupe verticale, d'une autre variante d'exécution très intéressante des moyens de transvasement de l'eau contenue dans ledit réservoir supérieur.

On se réfère auxdits dessins pour décrire des formes d'exécution intéressantes, quoique nullement limitatives, du dispositif de culture de plantes en pot selon la présente invention.

Ce dispositif comporte principalement:

Une enveloppe extérieure ou cache-pot 1;

un pot 5 logé dans ladite enveloppe extérieure;

un réservoir 6 disposé à la partie supérieure dudit dispositif et placé entre le pot 5 et le cache-pot 1;

et des moyens de transvasement 10, ou 12, ou 13, plongés dans ledit réservoir supérieur et dans le pot, pour permettre d'irriguer, de façon permanente et pendant une longue période, la terre contenue dans ce dernier, en fonction des besoins en eau de la plante.

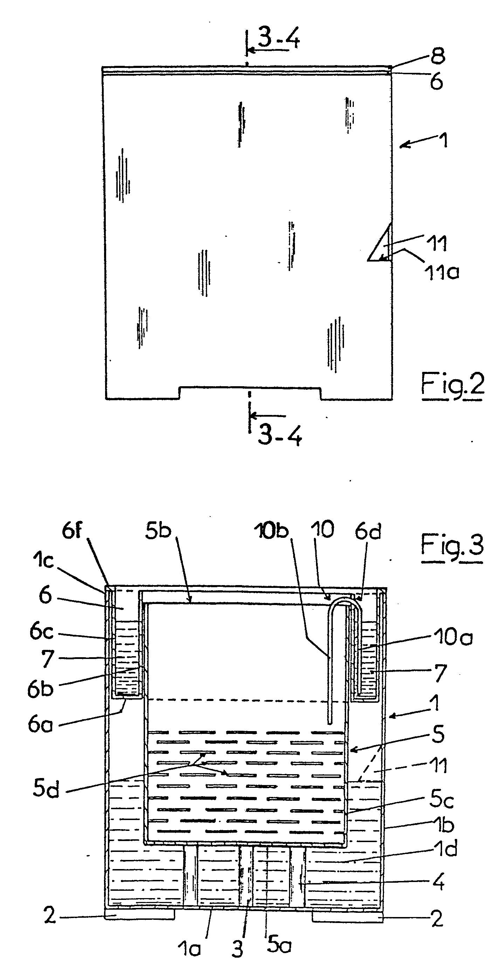

Suivant le mode d'exécution illustré aux fig. 1 à 3 et 5 à 7, le dispositif est exécuté entièrement en matière plastique et il affecte une forme extérieure parallélépipédique.

Il se compose d'une enveloppe extérieure ou cache-pot 1 portée par des piètements 2 réservés aux quatre angles et à sa partie inférieure, ce qui assure une bonne stabilité à l'ensemble. L'enveloppe 1 constitue un récipient parallélépipédique ouvert à sa partie supérieure en comprenant une paroi de fond la et quatre parois latérales 1b. Elle comporte, à sa partie centrale inférieure, un ou plusieurs supports et, par exemple, quatre supports s'étendant verticalement à partir de la face interne de la paroi de fond la de laquelle ils sont solidaires. L'un de ces supports 3 est disposé au centre et les trois autres 4 sont équidistants du support 3 et disposés à 120° l'un par rapport à l'autre. Lesdits supports 3, 4 sont tous d'égale hauteur et peuvent comporter une assise 3a, 4a pour augmenter la surface porteuse du pot central 5. Celui-ci est d'une forme cylindrique et repose par son fond 5a sur les supports 3, 4. Sa hauteur est telle que son bord supérieur 5b se situe légèrement au-dessous du bord supérieur 1c de l'enveloppe 1.

Le fond 5a du pot 5 et sa paroi latérale 5c comportent une pluralité de perforations, lesquelles peuvent adopter diverses formes. Tel que représenté sur les dessins, ces perforations peuvent être des trous cylindriques 5d' (fig. 1) ou des fentes 5d perpendiculaires aux génératrices de la paroi cylindrique 5c du pot (fig. 3), ou avoir toute autre forme.

Ces perforations sont, de préférence, réservées dans la moitié inférieure du pot 5.

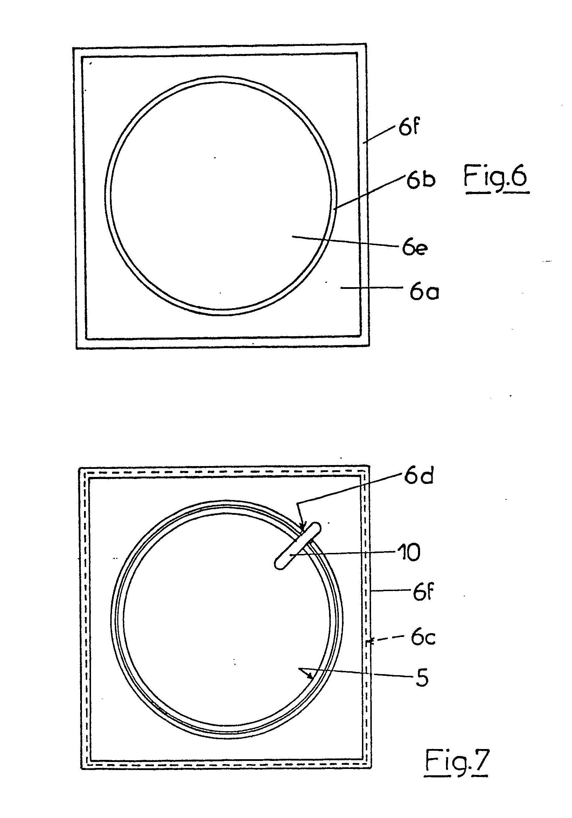

Le cache-pot comporte également, à la partie supérieure de l'enveloppe 1 et du pot 5, un récipient 6 permettant la constitution d'une réserve d'eau 7. Ce récipient ou réservoir 6 adopte une forme générale annulaire et occupe l'espace réservé entre le pot 5 et l'enveloppe 1. Il se compose d'un fond 6a et de deux parois latérales concentriques 6b, 6c (fig. 3 et 6) qui délimitent la réserve d'eau 7. La paroi 6b est cylindrique et constitue la paroi interne du réservoir 6. La paroi périphérique extérieure est constituée, dans l'exemple dérit, par quatre parois planes 6c délimitant un parallélépipède de section carrée (fig. 6), lequel est légèrement plus petit que l'ouverture supérieure de l'enveloppe 1.

Le diamètre de l'évidement 6e, délimité par la paroi centrale 6b est légèrement plus grand que le diamètre extérieur du pot 5. Le réservoir 6 comporte en outre un rebord périphérique 6f s'étendant à sa partie supérieure, par lequel il s'appuie sur le bord supérieur 1c de l'enveloppe 1 et son fond 6a se situe approximativement aux deux tiers supérieures de la hauteur de l'enveloppe 1.

La réserve d'eau supérieure 7 contenue dans le réservoir 6 peut être protégée par un couvercle 8 disposé à la partie supérieure du réservoir 6, lequel couvercle se présente sous la forme d'une plaque d'un contour carré et comportant au centre une ouverture circulaire 8a d'un diamètre sensiblement égal à celui de l'évidement 6e dudit réservoir.

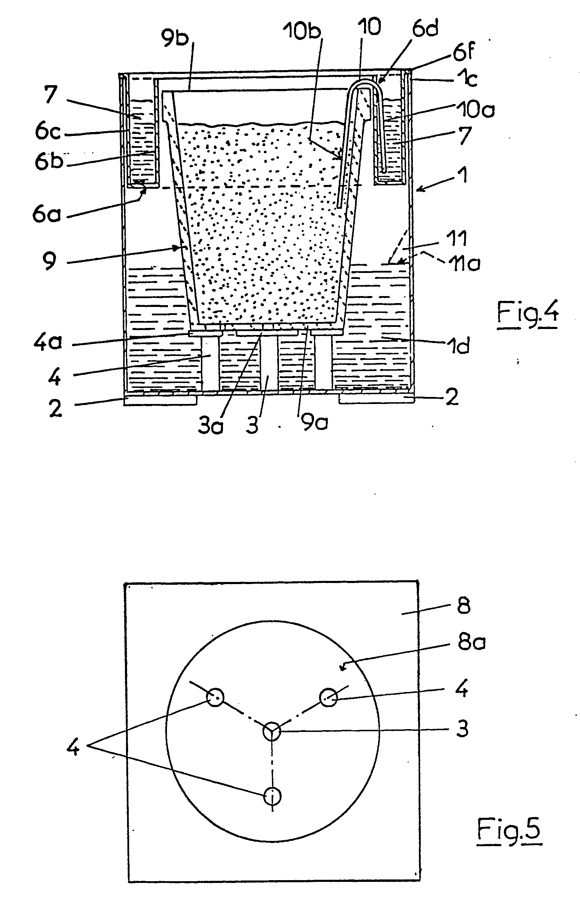

Tel qu'illustré à la fig. 4, on peut avantageusement utiliser, au lieu du pot 5 décrit ci-dessus, un pot horticole traditionnel 9 exécuté en terre cuite non vernissée et ayant une hauteur et un diamètre supérieur sensiblement identiques à ceux dudit pot 5 d'origine. Ce pot horticole 9 est logé dans l'enveloppe ou cache-pot 1 et il est posé sur les supports 3, 4.

L'irrigation de la terre contenue dans le pot 5 ou 9 est obtenue par l'intermédiaire de moyens de transvasement contournant le bord supérieur desdits pots et plongés à la fois dans le réservoir supérieur 6 et dans ledit pot.

Suivant les modes d'exécution représentés aux fig. 3 et 4, le transvasement lent et continu est réalisé par siphonnage en disposant, autour du pot 5 ou 9, un ou plusieurs siphons 10 de très petite section, en fonction des besoins en eau de la plante cultivée. Chacun de ces siphons 10 est constitué par un tube coudé dont les branches rectilignes sont d'inégales longueurs.

La branche 10a qui est plongée dans la réserve d'eau 7 est plus courte que l'autre branche rectiligne 10b qui est enfoncée dans la terre du pot 5 ou 9, de sorte qu'après amorçage, l'eau captée dans le récipient 6 soit distribuée par siphonnage au goutte à goutte dans la terre contenue dans ledit pot.

Afin d'utiliser la quasi totalité de la réserve d'eau supérieure, l'extrémité de la branche 10a du tube 10 se situe légèrement audessus du fond 6a du récipient 6.

Le transvasement lent et constant peut également être obtenu au moyen d'une ou plusieurs mêches 12 constituées de tresse de fibre spongieuse dont une portion 12a est plongée dans la réserve d'eau 7 contenue dans le réservoir 6, et dont l'autre portion 12b est enterrée dans la terre contenue dans le pot 5 ou 9.

Selon un autre mode d'exécution très intéressant, les moyens de transvasement lent et continu peuvent être constitués par un ou plusieurs dispositifs 13 formés, chacun, par une mêche 12 logée dans un tube coudé 10 et dont les extrémités émergent, de préférence, des extrémités dudit tube. Les branches de ce dernier peuvent être d'inégales ou d'égales longueurs, c'est-à-dire qu'il peut ou non constituer un siphon. Dans le cas où le dispositif de transvasement 13 comprend un tube formant siphon, la petite branche 13a de ce dispositif plonge dans le réservoir 6, tandis que sa grande branche 13b est enfoncée dans la terre contenue dans le pot 5 ou 9. Les siphons 10, les mêches 12 ou les dispositifs de transvasement 13 contournent le bord supérieur du pot 5 ou 9 et ils passent dans des orifices ou encouches 6d réservées à la partie supérieure de la paroi interne 6b du récipient 6.

L'enveloppe 1 comporte, latéralement, une ouverture 11 qui, suivant les modes d'exécution illustrés aux dessins, est ménagée dans l'un des angles latéraux de ladite enveloppe.

Le bord inférieur 11a de cette ouverture 11 est disposé à un niveau supérieur au niveau où se trouve l'extrémité supérieure des supports 3, 4, ledit bord inférieur 11a étant, par exemple situé au 2/5 de la hauteur de l'enveloppe 1.

De la sorte, le bord inférieur de l'ouverture 11 délimite un second réservoir 1d constitué par la partie inférieure de l'enveloppe 1 et susceptible de contenir une deuxième réserve d'eau dont la hauteur maximum correspont à environ 2/5 de la hauteur de ladite enveloppe, et dont le niveau se situe très au-dessus de l'extrémité des supports 3, 4. Lorsque le pot 5 ou 9 repose sur lesdits supports, sa partie inférieure baigne donc dans la seconde réserve d'eau contenue dans le réservoir inférieur 1d.

Lorsque le pot intérieur utilisé est un pot horticole classique obtenu en terre cuite non vernissée, c'est-à-dire en matériau perméable et poreux, sa partie inférieure baignant dans la réserve d'eau inférieure accomplit la fonction d'une mêche par le phénomène de capillarité qui se produit à travers la paroi poreuse dudit pot. En outre, il se créé un échange équilibré ayant un rôle bienfaisant, à travers la paroi latérale non immergée du pot, entre l'évaporation produite par la réserve d'eau et celle qui émane de l'eau imprégnant la terre contenue dans ce dernier; l'excédent de vapeur se condensant sur les parois du cache-pot 1 et dudit pot et s'écoulant, par ruissellement, dans ladite réserve. On obtient un résultat sensiblement identique un utilisant un pot 5 doté de perforations latérales 5d ou 5d', ces dernières permettant l'irrigation de la terre contenue dans ledit pot à travers la paroi latérale perforée immergée et un échange de vapeur et d'air à travers la paroi latérale perforée non immergée. Dans ce cas, les racines de la plante cultivée dans le pot 5 peuvent passer à travers les perforations 5d ou 5d' et plonger dans la seconde réserve, pour alimenter la plante en fonction de ses besoins, par exemple lorsqu'il s'agit de cultiver des plantes se développant dans un milieu saturé d'humidité. Un tel agencement peut également convenir pour la culture hydrophonique des plantes.

Lorsque la plante cultivée doit se développer dans un milieu faiblement humide, le second réservoir 1d ménagé dans la partie inférieure du cache-pot 1, est utilisé pour recevoir l'excédent éventuel d'eau s'écoulant du pot 5 ou 9.

On observe enfin que l'espace annulaire ménagé entre le pot 5 ou 9 et le cache-pot 1, au-dessus du niveau de la deuxième réserve d'eau, favorise également 1a bonne aération de la terre contenue dans ledit pot.

**Revendications**

1. Dispositif pour la culture de plantes en pot, comprenant:
Une enveloppe ou bac extérieur (1), utilisé(e) comme cache-pot, comportant un fond (1a), une paroi latérale (1b) et des moyens de support (3, 4) d'un pot de culture (5, 9) placé intérieurement en son centre et reposant sur lesdits moyens de support;
un réservoir (6) destiné à contenir de l'eau, situé à la partie supérieure de l'enveloppe (1) qui le supporte;
et des moyens d'irrigation (10, 12, 13) reliant ledit réservoir (6) audit pot de culture (6, 9);
caractérisé en ce que, afin de pouvoir recevoir indifféremment son propre pot ou des pots de culture traditionnels non modifiés, tout en servant de cache-pot, l'enveloppe ou bac extérieur (1) est muni(e), intérieurement, sur son fond (1a), de supports (3, 4) d'égale hauteur et s'étendant verticalement à partir dudit fond, en constituant ainsi les moyens de support du pot de culture (5, 9), les moyens d'irrigation (10, 12, 13), immergés par une extrémité (10a, 12a, 13a) dans l'eau (7) du réservoir (6) supporté par ladite enveloppe, contournant le bord supérieur du pot (5, 9) pour plonger, par leur autre extrémité (10b, 12b, 13b) dans ledit pot (5, 9), de manière à irriguer la plante contenue dans ce dernier en fonction de ses besoins de façon permanente.

2. Dispositif selon la revendication 1, caractérisé en ce que le réservoir d'eau (6) supporté par l'enveloppe ou bac extérieur (1) est constitué par un récipient annulaire amovible logé à l'intérieur de ladite enveloppe, entre la paroi latérale (1b) de celle-ci et la périphérie du pot de culture (5, 9).

3. Dispositif selon la revendication 2, caractérisé en ce que le réservoir (6) comporte un rebord (6f) à sa périphérie supérieure et est placé en appui, par ce rebord, sur le bord supérieur (1c) de l'enveloppe (1).

4. Dispositif suivant l'une quelconque des revendications 1 à 3, dont le fond (6a) du récipient annulaire (6) formant la réserve d'eau, se situe à un niveau supérieur à la mi-hauteur de l'enveloppe (1), caractérisé en ce que le fond (6a) du récipient annulaire (6) se situe sensiblement aux deux tiers de la hauteur de l'enveloppe (1).

5. Dispositif selon l'une quelconque des revendications 1 à 4, caractérisé en ce que les moyens d'irrigation sont constitués par au moins un siphon (10) formé par un tube de petite section dont la petite branche (10a) est plongée dans le réservoir (6) destiné à recevoir la réserve d'eau supérieure (7) et dont la grande branche (10b) plonge dans le pot (5, 9), l'irrigation se faisant au goutte à goutte par siphonnage.

6. Dispositif suivant l'une quelconque des revendications 1 à 4, caractérisé en ce que les moyens d'irrigation sont constitués par au moins une mèche spongieuse (12) dont une portion (12a) est plongée dans le réservoir (6) destiné à recevoir la réserve d'eau supérieure (7) et dont une autre portion (12b) plonge dans le pot (5, 9), l'irrigation se faisant au goutte à goutte par capillarité.

7. Dispositif selon l'une quelconque des revendications 1 à 4, caractérisé en ce que les moyens d'irrigation sont constitués par au moins un dispositif de transvasement (13) comprenant une mèche spongieuse (12) logée dans un tube coudé (10) et dont les extrémités émergent, de préférence, des extrémités dudit tube, l'une des branches (13a) de ce dispositif étant plongée dans le réservoir (6) destiné à recevoir la réserve d'eau supérieure (7), tandis que son autre branche (13b) plonge dans le pot (5, 9), l'irrigation se faisant au goutte à goutte, par capillarité et/ou par siphonnage.

8. Dispositif selon l'une quelconque des revendications 1 à 7, caractérisé en ce que l'enveloppe ou cache-pot (1) comporte, dans sa paroi latérale (1b), au moins une ouverture (11) dont le bord inférieur (11a) est disposé au-dessus du niveau auquel se trouve l'extrémité supérieure des supports (3, 4) portés par le fond de ladite enveloppe, ledit bord inférieur (11a) délimitant ainsi un second réservoir (1d) constitué par la partie inférieure de l'enveloppe et permettant de créer une deuxième réserve d'eau dans laquelle peut baigner la partie inférieure du pot (5, 9) reposant sur lesdits supports.

9. Dispositif suivant la revendication 8, caractérisé en ce que le pot (5) comporte une pluralité de perforations (5d) réservées dans le fond (5a) du pot (5) et dans la partie inférieure de sa paroi (5c), sensiblement sur la mi-hauteur dudit pot.

10. Dispositif suivant l'une quelconque des revendications 1 à 9, caractérisé en ce qu'il comporte un couvercle amovible (8) venant en recouvrement du réservoir d'eau amovible (6), ce couvercle comportant une ouverture centrale (8a) pour le passage de la plante.

**Claims**

1. Device for the culture of plants in pots comprising:

An external jacket or trough (1), used as a means of masking the pot, comprising a base (1a), a lateral wall (1b) and support means (3, 4) for a cultivation pot (5, 9) placed internally at its centre and resting on the said support means;

a reservoir (6) intended to contain water situated at the upper part of the jacket (1) which supports it;

and irrigation means (10, 12, 13) connecting the said reservoir (6) to the said cultivation pot (6, 9); characterised in that, in order to be able to receive its own pot or un-modified conventional cultivation pots, whilst serving as a pot mask, the external jacket or trough (1) is provided internally, on its base (1a), with supports (3, 4) of equal height and extending vertically from the said base, thus constituting the support means for the cultivation pot (5, 9), irrigation means (10, 12, 13), immersed at one end (10a, 12a, 13a) in the water (7) of the reservoir (6) supported by the said jacket, extending round the upper edge of the pot (5, 9) in order to dip, by their other end (10b, 12b, 13b) into the said pot (5, 9) in such a manner as to irrigate the plant, contained in this latter, permanently in accordance with its needs.

2. Device according to claim 1 characterised in that the reservoir of water (6) supported by the external jacket or trough (1) is constituted by a removable annular receptacle disposed at the interior of the said jacket between the lateral wall (1b) of this latter and the periphery of the cultivation pot (5, 9).

3. Device according to claim 2 characterised in that the reservoir (6) comprises a flange (6f) at its upper periphery and is placed in contact, by this flange, on the upper edge (1c) of the jacket (1).

4. Device according to any one of claims 1 to 3 of which the base (6a) of the annular receptacle (6) forming the water reservoir is disposed at a level higher than the mid-height of the jacket (1), characterised in that the base (6a) of the annular receptacle (6) is disposed substantially at two thirds of the height of the jacket (1).

5. Device according to any one of claims 1 to 4, characterised in that the irrigation means are constituted by at least one siphon (10) formed by a tube of small section of which the small arm (10a) dips into the reservoir (6) intended to receive the upper supply of water (7) and of which the large arm (10b) dips into the pot (5, 9), the irrigation taking place drop by drop by siphoning.

6. Device according to any one of claims 1 to 4, characterised in that the irrigation means are constituted by at least one spongy wick (12) of which a portion (12a) dips into the reservoir (6) intended to receive the upper supply of water (7) and of which another portion (12b) dips into the pot (5, 9), the irrigation taking place drop by drop by capillarity.

7. Device according to any one of claims 1 to 4 characterised in that the irrigation means are constituted by at least one transfusing device (13) comprising a spongy wick (12) disposed in a bent tube (10) and of which the ends preferably emerge from the end of the said tube, one of the arms (13a) of this device dipping into the reservoir (6) intended to receive the upper supply of water (7), whilst its other arm (13b) dips into the pot (5, 9), the irrigation taking place drop by drop by capillarity and/or by siphoning.

8. Device according to any one of claims 1 to 7 characterised in that the jacket or pot mask (1) comprises, in its lateral wall (1b), at least one opening (11) the lower edge of which (11a) is disposed above the level at which is placed the upper end of the supports (3, 4) carried by the base of the said jacket, the said lower edge (11a) thereby bounding a second reservoir (1d) constituted by the lower part of the jacket and permitting the creation of a second supply of water which can bathe the lower part of the pot (5, 9) resting on the said supports.

9. Device according to claim 8 characterised in that the pot (5) comprises a plurality of perforations (5d) provided in the base (5a) of the pot (5) and in the lower part of its wall (5c), substantially at the mid-height of the said pot.

10. Device according to any one of claims 1 to 9 characterised in that it comprises a removable cover (8) covering the removable water reservoir (6), this cover comprising a central opening (8a) for the passage of the plant.

**Patentansprüche**

1. Vorrichtung für die Zucht von Pflanzen in Töpfen, die folgendes umfasst:

Eine Verkleidung oder äusseren Trog (1), die (der) als Übertopf verwendet wird, bestehend aus einem Boden (1a), einer Seitenwandung (1b) und Stützmitteln (3, 4) für einen Pflanztopf (5, 9), der inwendig in seinen Mittelpunkt gestellt wird und auf den besagten Stützmitteln ruht;

einen Behälter (6), der dazu bestimmt ist, Wasser aufzunehmen, und an dem oberen Teil der Verkleidung (1) sitzt, welche ihn abstützt;

und Bewässerungsmittel (10, 12, 13), die den besagten Behälter (6) mit dem besagten Pflanztopf (5, 9) verbinden;

dadurch gekennzeichnet, dass die Verkleidung oder äussere Trog (1), um in gleicher Weise den dazugehörigen Topf oder herkömmliche, ungeänderte Pflanztöpfe aufzunehmen, wobei sie (er) als Übertopf dient, inwendig, an ihrem (seinem) Boden (1a) mit Stützen (3, 4) versehen ist, welche gleich hoch sind und sich senkrecht von dem besagten Boden weg erstrecken, wodurch sie auf diese Weise die Stützmittel für den Pflanztopf (5, 9) bilden, dass die Bewässerungsmittel (10, 12, 13), welche mit einem Ende (10a, 12a, 13a) in das Wasser (7) des Behälters (6) gesenkt sind, der von der besagten Verkleidung abgestützt wird, über die Oberkante des Topfes (5, 9) laufen, um mit ihrem anderen Ende (10b, 12b, 13b) im besagten Topf (5, 9) einzutauchen, so dass die darin enthaltene Pflanze fortlaufend entsprechend ihren Bedürfnissen bewässert wird.

2. Vorrichtung nach Anspruch 1, dadurch gekennzeichnet, dass der Wasserbehälter (6), der von der Verkleidung oder äusseren Trog (1) abgestützt wird, aus einem ringförmigen, abnehmbaren Gefäss besteht, das innerhalb der besagten Verkleidung, zwischen ihrer Seitenwandung (1b) und der Peripherie des Pflanztopfes (5, 9), untergebracht ist.

3. Vorrichtung nach Anspruch 2, dadurch gekennzeichnet, dass der Wasserbehälter (6) an seinem oberen Umfang eine Randleiste (6f) aufweist und durch diese Randleiste auf der Oberkante (1c) der Verkleidung (1) abgstützt angebracht ist.

4. Vorrichtung nach einem der Ansprüche 1 bis 3, deren Boden (6a) des ringförmigen Gefässes (6), das den Wasservorrat bildet, sich auf einer Ebene befindet, die über der halben Höhe der Verkleidung (1) liegt, dadurch gekennzeichnet, dass der Boden (6a) des ringförmigen Gefässes (6) sich ungefähr bei ⅔ der Höhe der Verkleidung (1) befindet.

5. Vorrichtung nach einem der Ansprüche 1 bis 4, dadurch gekennzeichnet, dass die Bewässerungsmittel aus mindestens einem Saugheber (10) bestehen, der aus einem Rohr mit kleinem Querschnitt gebildet wird, dessen kurzer Schenkel (10a) in das Gefäss (6) gesenkt ist, welches dazu bestimmt ist, den oberen Wasservorrat (7) aufzunehmen und dessen langer Schenkel (10b) in den Topf (5, 9) eintaucht, wobei die Bewässerung tropfenweise durch Saughebung erfolgt.

6. Vorrichtung nach einem der Ansprüche 1 bis 4, dadurch gekennzeichnet, dass die Bewässerungsmittel aus mindestens einem schwammartigen Docht (12) bestehen, von dem ein Teil (12a) in den Behälter (6) gesenkt ist, der dazu dient, den oberen Wasservorrat (7) aufzunehmen und dessen anderer Teil (12b) in den Topf (5, 9) eintaucht, wobei die Bewässerung tropfenweise durch Kapillarwirkung erfolgt.

7. Vorrichtung nach einem der Ansprüche 1 bis 4, dadurch gekennzeichnet, dass die Bewässerungsmittel aus mindestens einer Umfüllvorrichtung (13) bestehen, welche aus einem schwammartigen Docht (12), der in einem gekrümmten Rohr (10) untergebracht ist, besteht, und dessen Enden vorzugsweise aus den Enden des besagten Rohrs herausragen, wobei einer der Schenkel (13a) dieser Vorrichtung in den Behälter (6) gesenkt ist, der dazu bestimmt ist, den oberen Wasservorrat (7) aufzunehmen, während sein anderer Schenkel (13b) in den Topf (5, 9) eintaucht, wobei die Bewässerung tropfenweise durch Kapillarwirkung und/oder durch Saughebung erfolgt.

8. Vorrichtung nach einem der Ansprüche 1 bis 7, dadurch gekennzeichnet, dass die Verkleidung oder Übertopf (1) an ihrer (seiner) Seitenwandung (1b) mindestens eine Öffnung (11) aufweist, deren Unterkante (11a) oberhalb der Ebene angeordnet ist, in der sich das obere Ende der Stützen (3, 4) befindet, die von dem Boden der besagten Verkleidung getragen werden, wobei die besagte Unterkante (11a) auf diese Weise einen zweiten Behälter (1d) begrenzt, der aus dem unteren Teil der Verkleidung besteht und dadurch die Schaffung eines zweiten Wasservorrats ermöglicht, in welchem der untere Teil des Topfes (5, 9), der auf den besagten Stützen ruht, bespült werden kann.

9. Vorrichtung nach Anspruch 8, dadurch gekennzeichnet, dass der Topf (5) mehrere Durchbohrungen aufweist (5d), die in dem Boden (5a) des Topfes (5) und in dem unteren Teil seiner Wandung (5c), etwa auf halber Höhe des besagten Topfes vorgesehen sind.

10. Vorrichtung nach einem der Ansprüche 1 bis 9, dadurch gekennzeichnet, dass sie einen abnehmbaren Deckel (8) zur Abdeckung des abnehmbaren Wasserbehälters (6) besitzt, wobei dieser Deckel eine zentrale Öffnung (8a) zur Durchführung der Pflanze aufweist.

Fig.2

Fig.3

Fig.4

Fig.5

6f

6b  <u>Fig.6</u>

6e

6a

6d

10

6f

6c

5

<u>Fig.7</u>

Fig.8

Fig.9